(19) Europäisches Patentamt / European Patent Office / Office européen des brevets

(11) **EP 2 680 953 B1**

(12) **EUROPÄISCHE PATENTSCHRIFT**

(45) Veröffentlichungstag und Bekanntmachung des Hinweises auf die Patenterteilung:
**05.11.2014 Patentblatt 2014/45**

(51) Int Cl.:
*B01J 37/02* (2006.01)   *B01D 53/94* (2006.01)
*B01J 29/068* (2006.01)   *B01J 29/072* (2006.01)
*B01J 29/076* (2006.01)   *B01J 29/12* (2006.01)
*B01J 29/18* (2006.01)   *B01J 29/46* (2006.01)
*B01J 29/65* (2006.01)   *B01J 29/76* (2006.01)
*B01J 29/78* (2006.01)   *B01J 29/80* (2006.01)
*B01J 33/00* (2006.01)   *B01J 35/02* (2006.01)
*F01N 3/20* (2006.01)

(21) Anmeldenummer: **12706259.4**

(22) Anmeldetag: **01.03.2012**

(86) Internationale Anmeldenummer:
**PCT/EP2012/053487**

(87) Internationale Veröffentlichungsnummer:
**WO 2012/117041 (07.09.2012 Gazette 2012/36)**

(54) **SCR-KATALYSATOR MIT VERBESSERTER KOHLENWASSERSTOFFRESISTENZ**

SCR CATALYTIC CONVERTER HAVING IMPROVED HYDROCARBON RESISTANCE

CATALYSEUR SCR PRÉSENTANT UNE RÉSISTANCE AMÉLIORÉE AUX HYDROCARBURES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2011 EP 11001789**

(43) Veröffentlichungstag der Anmeldung:
**08.01.2014 Patentblatt 2014/02**

(73) Patentinhaber: **Umicore AG & Co. KG**
**63457 Hanau-Wolfgang (DE)**

(72) Erfinder:
• **SOEGER, Nicola**
**61130 Nidderau (DE)**

• **ADELMANN, Katja**
**63452 Hanau (DE)**
• **SEYLER, Michael**
**63814 Mainaschaff (DE)**
• **PAULY, Thomas R.**
**Clarkston, Michigan 48348 (US)**
• **JESKE, Gerald**
**63543 Neuberg (DE)**

(56) Entgegenhaltungen:
**WO-A1-2009/135588    US-A1- 2010 077 738**
**US-A1- 2010 290 963**

**Beschreibung**

Die Erfindung betrifft einen Katalysator für die selektive katalytische Reduktion von Stickoxiden in den Abgasen von Dieselmotoren, der sich durch eine verbesserte Resistenz gegenüber den ebenfalls im Dieselabgas vorhandenen Kohlenwasserstoffen auszeichnet, sowie dessen Herstellung und Anwendung zur Reinigung von Dieselabgasen insbesondere in automobilen Applikationen.

Das Abgas von Dieselmotoren enthält neben den aus einer unvollständigen Verbrennung des Kraftstoffs resultierenden Schadgasen Kohlenmonoxid (CO) und Kohlenwasserstoffe (HC) Russpartikel (PM) und Stickoxide ($NO_x$). Außerdem enthält das Abgas von Dieselmotoren bis zu 15 Vol.-% Sauerstoff. Es ist bekannt, daß die oxidierbaren Schadgase CO und HC durch Überleiten über einen geeigneten Oxidationskatalysator in Kohlendioxid ($CO_2$) umgewandelt und Partikel durch Durchleiten des Abgases durch ein geeignetes Russpartikelfilter entfernt werden können. Auch Technologien zur Entfernung von Stickoxiden aus Abgasen in Gegenwart von Sauerstoff sind im Stand der Technik gut bekannt. Eines dieser "Entstickungsverfahren" ist das sogenannte SCR-Verfahren (SCR = Selective Catalytic Reduction), d.h. die selektive katalytische Reduktion der Stickoxide mit dem Reduktionsmittel Ammoniak an einem dafür geeigneten Katalysator, dem SCR-Katalysator. Dabei kann Ammoniak als solches oder in Form einer unter Umgebungsbedingungen zu Ammoniak zersetzlichen Vorläuferverbindung dem Abgasstrom zugegeben werden, wobei unter "Umgebungsbedingungen" die Umgebung der zu Ammoniak zersetzlichen Verbindung im Abgasstrom vor SCR-Katalysator verstanden wird. Zur Durchführung des SCR-Verfahrens sind eine Quelle zur Bereitstellung des Reduktionsmittels, eine Einspritzvorrichtung zur bedarfsgerechten Eindosierung des Reduktionsmittels in das Abgas und ein im Strömungsweg des Abgases angeordneter SCR-Katalysator notwendig. Die Gesamtheit aus Reduktionsmittelquelle, SCR-Katalysator und anströmseitig zum SCR-Katalysator angeordneter Einspritzvorrichtung wird auch als SCR-System bezeichnet.

Mit den künftig geltenden gesetzlichen Grenzwerten wird für alle neu zugelassenen Dieselfahrzeuge eine Abgasnachbehandlung zur Entfernung aller vom Motor emittierten Schadgase im allgemeinen unumgänglich sein. Somit wird es für die aktuellen Applikationen zur Dieselabgasnachbehandlung notwendig, Dieseloxidationskatalysator, Dieselpartikelfilter und SCR-Systeme zu kombinieren, wobei die Kombination dieser Aggregate vor allem für den SCR-Katalysator geänderte Betriebsbedingungen mit sich bringt. Derzeit sind drei derartige Systeme in der Erprobung: Im sogenannten "SCRT®-System" nach EP 1 054 722 werden in Strömungsrichtung des Abgases ein Dieseloxidationskatalysator, ein Dieselpartikelfilter und ein SCR-System hintereinander angeordnet. Alternativ kann das SCR-System zwischen einem motornahen Dieseloxidationskatalysator und einem Dieselpartikelfilter im Unterboden des Fahrzeugs (DOC - SCR - DPF) oder vor einer Einheit aus Dieseloxidationskatalysator und Dieselpartikelfilter (SCR-DOC-DPF) angeordnet werden.

Die Kombination von Dieselpartikelfilter und SCR-System in einem Abgasstrang bedingt, daß der SCR-Katalysator in bestimmten Betriebspunkten dauerhaft signifikant höheren HC-Konzentrationen ausgesetzt ist, als dies in bisherigen Applikationen der Fall war. Für diese erhöhten HC-Konzentrationen gibt es mehrere Ursachen:

Zum einen erfolgt die Kalibrierung der innermotorischen Verbrennung nun nicht mehr mit dem Ziel, kostenintensive Abgasnachbehandlungsstufen einzusparen, sondern nach Gesichtspunkten der Leistungsoptimierung, wobei Partikel und HC sowie Stickoxide als Emission gleichberechtigt zugelassen werden. Dies bedingt eine gewisse HC-Grundbelastung des Abgasnachbehandlungssystems, wobei das Abgas bereits deutlich höhere HC-Konzentrationen aufweist, als in den bislang üblichen Anwendungen, in denen SCR-Systeme zum Einsatz kamen. Zum anderen muß das Dieselpartikelfilter in regelmäßigen Abständen regeneriert werden, was unter anderem durch einen kontrollierten Abbrand der Partikellast geschieht. Hierzu muß das Filter auf eine Temperatur, die oberhalb der Rußzündtemperatur liegt, erwärmt werden. Diese Erwärmung (sog. "heat-up") erfolgt durch Nacheinspritzung von Kraftstoff in den Auslaßkolbenhub des Zylinders oder in den Abgasstrang und durch katalytische Umsetzung der unverbrannten Kohlenwasserstoffe auf einem oxidierend wirkenden Katalysator (sog. "heat-up-Katalysator"). Meist übernimmt ein vorgelagerter Dieseloxidations-katalysator die Funktion des "heat-up-Katalysators". Ist dieser nicht vorhanden, so kann gegebenenfalls auch der SCR-Katalysator "heat-up"-Funktionen übernehmen. In jedem Falle stehen während der Filterregeneration vor dem SCR-Katalysator höhere HC-Konzentrationen an, da die nach Zündung eingespritzten Kohlenwasserstoffe während des "heat-ups" katalytisch nicht vollständig verbrannt werden. In einem SCRT®-System, worin dem SCR-Katalysator Dieseloxidationskatalysator und Dieselpartikelfilter vorgelagert sind, tritt nach einer gewissen Laufzeit zudem eine HC-Dauerbelastung des SCR-Katalysators auf, die auf die hydrothermale Alterung der Oxidationsfunktionen in Dieseloxidationskatalysator und im gegebenenfalls katalytisch beschichteten Filter zurückzuführen ist.

Unabhängig von einer Regeneration des Dieselpartikelfilters können weitere Heizmaßnahmen durch Kraftstoffnacheinspritzung beispielsweise zur Kompensation von Kaltstartverzögerungen notwendig sein und zu kurzzeitig drastisch erhöhten HC-Konzentrationen vor SCR-Katalysator führen.

Die genannten Effekte bedingen, daß der SCR-Katalysator in modernen Abgasreinigungs-Kombinationssystemen geänderten Betriebsbedingungen ausgesetzt ist, wobei die vor dem SCR-Katalysator im Abgas vorhandenen HC-Gehalte deutlich höher sind, als in bisherigen Applikationen. Herkömmliche SCR-Katalysatoren zeigen unter diesen Bedingungen im allgemeinen einen deutlichen Einbruch der Stickoxid-Konvertierungsleistungen im Vergleich zu ihrer Aktivität in nicht-Kohlenwasserstoffe-haltigem Abgas. In jüngster Zeit sind auch Kohlenwasserstoff-resistente SCR-Katalysatoren im Stand der Technik beschrieben worden.

So offenbart WO 2009/135588 ein Verfahren zur Behandlung von Stickoxide ($NO_x$) und Kohlenwasserstoffe (HC) enthaltenden Dieselmotorenabgasen umfassend: a) die Zugabe von Ammoniak ($NH_3$) als solchem oder in Form einer Verbindung, die unter Umgebungsbedingungen Ammoniak entstehen läßt, aus einer nicht zum Abgasstrang gehörenden Quelle in den Stickoxide und Kohlenwasserstoffe enthaltenden Abgasstrom; und b) die selektive Umsetzung von $NO_x$ mit dem dem Abgasstrom zugefügten $NH_3$ an einem SCR-Katalysator enthaltend einen mit Kupfer (Cu) und/oder Eisen (Fe) ausgetauschten Zeolithen, der dadurch gekennzeichnet ist, daß die im Abgas enthaltenen Kohlenwasserstoffe durch die molekularsiebartige Wirkung des Zeolithen von den aktiven Zentren im Katalysator, an denen die Umsetzungen stattfinden, ferngehalten werden. Als Zeolithe werden kleinporige Zeolithe, insbesondere Ferrierit, Chabazit und Erionit verwendet, in die die Kohlenwasserstoffe aufgrund ihrer Größe nicht eindringen können.

Diese Kohlenwasserstoff-resistenten SCR-Katalysatoren zeichnen sich zwar dadurch aus, daß ihre Stickoxid-Konvertierungsaktivität im Kohlenwasserstoffe-haltigen Abgas gegenüber ihrer Aktivität im Kohlenwasserstoffe-freien Abgas deutlich weniger absinkt. Allerdings sind die mit diesen Katalysatoren auch im Kohlenwasserstoff-freien Abgas erzielbaren Stickoxid-Konvertierungen insgesamt signifikant schlechter als die herkömmlicher SCR-Katalysatoren. Auch die hydrothermale Alterungsstabilität dieser HC-resistenten Katalysatoren bleibt oft deutlich hinter der hydrothermalen Alterungsstabilität herkömmlicher SCR-Katalysatoren zurück.

Ein erhöhter Gehalt von Kohlenwasserstoffen im zu reinigenden Abgas wirkt sich weiterhin zumeist nachteilig auf die Dauerstabilität der SCR-Katalysatoren aus. Dies gilt insbesondere für herkömmliche SCR-Katalysatoren, deren Funktionalität auf der SCR-Aktivität Übergangsmetall-ausgetauschter Zeolithe mit mittleren oder größeren Porengrößen, wie beispielsweise Mordenit, β-Zeolith, USY, ZSM-5 oder ZSM-20 beruht, da diese Kohlenwasserstoffe aus dem Abgas im Zeolith-Gerüst einspeichern können. Die im Abgas enthaltenen Kohlenwasserstoffe werden bei kälteren Betriebstemperaturen in Konkurrenz zu Ammoniak im Zeolith-Gerüst eingespeichert. Wird der Katalysator dann erhöhten Betriebstemperaturen ausgesetzt, die über der Initialtemperatur (sog. Light-Off) für die katalytische Kohlenwasserstoffoxidation liegen, so "verbrennen" die eingespeicherten Kohlenwasserstoffe im Zeolithen. Durch die freiwerdende Reaktionsenthalpie wird dann im Katalysator eine beträchtliche Exotherme erzeugt, wobei der entsprechende Temperaturanstieg zu einer erheblichen Schädigung der katalytisch aktiven Zentren im zeolithischen Katalysator führen kann.

US2010/077738 A1 beschreibt einen zweischichtigen NOx Reduktionskatalysator, bei der die auf dem Substrat liegende Schicht einen Metall-haltigen Zeolithen und die darüber liegende Schicht einen Zeolithen mit Poren von kleiner gleich 5 Angström, enthalten kann.

Die US2010/290963 A1 beschreibt ein Verfahren zur selektiven katalytischen Reduktion von NOx mittels SAPO-34.

Der vorliegenden Erfindung lag die Aufgabe zugrunde, SCR-Katalysatoren zur Verfügung zu stellen, die sich gegenüber herkömmlichen, Zeolith-basierten SCR-Katalysatoren durch eine verbesserte HC-Resistenz auszeichnen, die dabei zugleich aber eine höhere SCR-Aktivität vor und nach hydrothermaler Alterung aufweisen als HCresistente SCR-Katalysatoren nach dem Stand der Technik.

Die Aufgabe wird gelöst durch einen Katalysator für die selektive katalytische Reduktion von Stickoxiden mit Ammoniak in Kohlenwasserstoffe enthaltenden Abgasen enthaltend:

- einen Tragkörper;
- eine erste, direkt auf den Tragkörper aufgebrachte, katalytisch aktive Beschichtung enthaltend einen mit einem oder mehreren Übergangsmetallen ausgetauschten Zeolithen und/oder eine mit einem oder mehreren Übergangsmetallen ausgetauschte zeolithähnliche Verbindung, und
- eine zweite Beschichtung, die die erste Beschichtung abgasseitig überdeckt und so beschaffen ist, dass sie den Kontakt von im Abgas enthaltenen Kohlenwasserstoffen mit mindestens 3 C-Atomen mit der darunter liegenden ersten Beschichtung behindert, ohne dabei den Durchtritt von Stickoxiden und Ammoniak zur ersten Beschichtung zu blockieren und

ein oder mehrere Oxide ausgewählt aus der Gruppe bestehend aus Siliziumdioxid, Germaniumdioxid, Aluminiumoxid, Titandioxid, Zinnoxid, Ceroxid, Zirkondioxid und Mischoxiden davon, enthält.

Unter "zeolithähnlichen Verbindungen" werden im Rahmen dieser Schrift solche verstanden, die eine typische Zeolithstruktur ("Zeolith-Gerüst") ausbilden, jedoch nicht bzw. nicht ausschließlich aus Aluminiumsilikat aufgebaut sind. Hierzu gehören insbesondere Siliziumaluminiumphosphate (SAPO) und Aluminiumphosphate (ALPO).

Die erste, direkt auf den Tragkörper aufgebrachte, katalytisch aktive Beschichtung im erfindungsgemäßen Katalysator katalysiert die Umsetzung von Stickoxiden mit Ammoniak. Sie enthält bevorzugt einen Übergangsmetall-ausgetauschten Zeolithen und /oder eine Übergangsmetall-ausgetauschte zeolithähnliche Verbindung, die ausgewählt ist aus der Gruppe bestehend aus β-Zeolith, ZSM-5, ZSM-20, USY, MOR oder Mischungen davon. Besonders bevorzugt sind β-Zeolith, USY und MOR. Das im Zeolith bzw. in der zeolithähnlichen Verbindung enthaltene Übergangsmetall ist bevorzugt ausgewählt aus der Gruppe bestehend aus Cer, Mangan, Eisen, Kupfer, Silber, Gold, Platin, Palladium und/oder Mischungen davon. Ganz besonders bevorzugt sind Cer, Eisen und Kupfer.

Die zweite Beschichtung überdeckt die erste Beschichtung abgasseitig bevorzugt vollständig. Die erfindungsgemäße Wirkung tritt aber auch dann noch ein, wenn die Überdeckung lediglich nahezu vollständig ist. Insbesondere liegt somit die Überdeckung der ersten Beschichtung durch die zweite Beschichtung bei 90 bis 100%, besonders bevorzugt bei 95 bis 100%, jeweils bezogen auf die Fläche der ersten Beschichtung.

Bevorzugte Oxide, die in der zweiten Schicht enthalten sein können, sind Siliziumdioxid, Titandioxid, Aluminiumoxid und Ceroxid, ganz besonders bevorzugt ist Siliziumdioxid. Um eine hinreichende Porosität dieser Schicht und somit eine hinreichende Durchtrittsfähigkeit der Reaktanden Ammoniak und Stickoxide bei zugleich ausreichender Sperrwirkung gegenüber den im Abgas enthaltenen Kohlenwasserstoffen zu gewährleisten, ist der $d_{50}$-Wert der Oxide in der zweiten Beschichtung bevorzugt gleich oder kleiner als 100 nm, besonders bevorzugt gleich oder kleiner als 70 nm. Dabei wird unter dem $d_{50}$-Wert der Partikelgrößenverteilung der Oxide verstanden, dass 50 % des Gesamtvolumens der Oxide nur solche Partikel enthalten, deren Durchmesser kleiner oder gleich dem als $d_{50}$ angegebenen Wert ist.

Die zweite Beschichtung kann hergestellt werden, in dem man ein geeignetes Oxid in Wasser suspendiert, gegebenenfalls durch Mahlung die oben genannte bevorzugte Partikelgrößenverteilung der Oxide in Suspension einstellt und dann einen bereits mit der ersten Schicht versehenen Tragkörper nach einem herkömmlichen, dem Fachmann bekannten Tauch-, Saug- oder Pumpverfahren mit dieser Suspension beschichtet.

Erfindungsgemäß sind Oxide bevorzugt die keine Fernordnung aufweisen, d.h. in amorpher Form vorliegen.

Dementsprechend wird die zweite Beschichtung des erfindungsgemäßen Katalysators bevorzugt in einem Verfahren erzeugt, das die Imprägnierung eines bereits mit der ersten Beschichtung versehenen Tragkörpers mit einer Lösung, die ein oder mehrere Alkoholate der Formel (I)

$$(RO)_{n-m}MeR'_m \qquad (I)$$

enthält, worin
n für 3 oder 4 steht und m < n ist:

Me Silizium, Germanium, Aluminium, Titan, Zinn oder Zirkonium bedeutet;
R für ($C_1$-$C_4$)-Alkyl oder Phenyl steht; und
R' für ($C_1$-$C_8$)-Alkyl, Amino-($C_1$-$C_4$)-Alkyl, Amino-($C_1$-$C_4$)-Alkyl, deren Aminogruppe durch Amino-($C_1$-$C_4$)-alkyl substituiert ist oder Methacryloxy-($C_1$-$C_4$)-alkyl steht und anschließendes Trocknen umfasst.

Die Bildung der Oxide erfolgt dabei durch Hydrolyse der Alkoholate und Kondensation der Hydrolyseprodukte unter Ausbildung von Me-O-Ketten und -Netzwerken, aus denen sich die Oxide schließlich aufbauen.

Vorteilhafterweise schließt sich an das Trocknen eine Kalzinierung an.

Die oben genannten Alkylgruppen können geradkettig oder verzweigt sein und beispielsweise Methyl, Ethyl, n-Propyl, i-Propyl, n-Butyl oder i-Butyl sein. ($C_1$-$C_8$)-Alkyl kann darüber hinaus beispielsweise auch für Pentyl, Hexyl, Heptyl oder Octyl stehen. R steht bevorzugt für Methyl" Ethyl, Isopropyl, Butyl oder Phenyl.

R' steht bevorzugt für Amino-($C_1$-$C_4$)-alkyl, insbesondere Aminomethyl und Aminoethyl, N-(2-Aminoethyl)-3-aminopropyl, Isopropyl, Isobutyl, Phenyl, Octyl oder Methacryloxy-($C_1$-$C_4$)-alkyl, insbesondere Methacryloxymethyl, Methacryloxyethyl oder Methacryloxypropyl.

Besonders bevorzugt steht Me für Silizium. Als Alkoholate der Formel (I) werden in diesem Falle insbesondere Tetraethoxysilan, Diisobutyldimethoxysilan, N-(2-Aminoethyl)-3-aminopropyltrimethoxysilan, Phenyltriethoxysilan, Methacryloxypropyltrimethoxysilan und Triethoxyoctylsilan eingesetzt.

Ausführungsformen des erfindungsgemäßen Katalysators eignen sich besonders gut für automobile Applikationen und sind zudem kostengünstig - auch nach vorstehend skizzierten Verfahren - herzustellen, wenn die zweite Beschichtung aus Siliziumdioxid besteht.

Erfindungsgemäße Katalysatoren, deren zweite Beschichtung aus Siliziumdioxid besteht, können alternativ zur vorstehend beschriebenen Weise auch hergestellt werden durch Aufbringen einer wässrigen Suspension von pyrogener Kieselsäure auf einen bereits mit der ersten, zeolithischen Beschichtung versehenen Tragkörper. Dabei ist eine pyrogene Kieselsäure zu wählen, die Primärpartikel mit einem $d_{50}$-Wert der Partikelgrößenverteilung gleich oder kleiner als 100 nm, bevorzugt gleich oder kleiner 70 nm und besonders bevorzugt gleich oder kleiner als 50 nm aufweist. Dabei ist unter $d_{50}$-Wert der Partikelgrößenverteilung zu verstehen, daß 50 % des Gesamtvolumens der pyrogenen Kieselsäure nur solche Partikel enthält, deren Durchmesser kleiner oder gleich dem als $d_{50}$ angegebenen Wert ist. Zum Einsatz in diesem Verfahren bevorzugte pyrogene Kieselsäuren weisen eine Halogenid- und/oder Hydroxid-modifizierte Oberfläche auf, mit Hilfe deren Funktionalität während oder gegebenenfalls nach dem Aufbringen der wässrigen Suspension der Kieselsäure durch Hydrolyse und/oder Kondensation eine Vernetzung der Kieselsäure-Partikel in der resultierenden Schicht erzeugt wird.

Der erfindungsgemäße Katalysator in allen seinen vorstehend beschriebenen und weiteren denkbaren Ausführungsformen eignet sich zur Verminderung von Stickoxiden enthaltend Stickstoffmonoxid und Stickstoffdioxid in Kohlenwasserstoff-haltigen Dieselmotorenabgasen. Hierzu wird das zu reinigende, Stickoxide und Kohlenwasserstoffe enthaltende Abgas nach Zugabe von Ammoniak oder einer zu Ammoniak zersetzlichen Vorläuferverbindung als Reduktionsmittel über einen erfindungsgemäßen SCR-Katalysator geleitet. Bevorzugt wird das zu reinigende, Stickoxide und Kohlenwasserstoffe enthaltende Abgas vor der Zugabe von Ammoniak oder einer zu Ammoniak zersetzlichen Vorläuferverbindung über einen Oxidationskatalysator geleitet, der wirksam ist, um wenigstens einen Teil des im Abgas enthaltenen Stickstoffmonoxids in Stickstoffdioxid umzuwandeln. Im Idealfall führt dies dazu, daß die Stickoxide im zu reinigenden Abgas vor Eintritt in den SCR-Katalysator einen Stickstoffdioxid-Anteil von 30 bis 70 % aufweisen. Dabei kann der Oxidationskatalysator in Form einer katalytisch aktiven Beschichtung auf einem monolithischen Durchflußwabenkörper und/oder auf einem Wandflußfiltersubstrat vorliegen.

Die Erfindung wird im Folgenden anhand einiger Beispiele und Figuren eingehender beschrieben. Es zeigen:

**Figur 1:** die Abgastemperatur vor und nach einem SCR-Katalysator nach dem Stand der Technik (VK1), der vor Beginn der Messungen mit Kohlenwasserstoffen beladen wurde: Das Anheben der Reaktortemperatur / Temperatur vor Katalysator auf 400°C führt zu einer deutlichen, durch HC-Abbrand verursachten Exotherme;

**Figur 2:** die Temperaturdifferenz $\Delta T$ zwischen der Temperatur vor Katalysator und der Temperatur nach Katalysator, wenn der Katalysator vor Beginn der Messung mit Kohlenwasserstoffen beladen wurde, nach Anheben der Reaktortemperatur / Temperatur vor Katalysator auf 400°C: Vergleich der durch HC-Abbrand erzeugten Exotherme über dem erfindungsgemäßen Katalysator K2 (frisch hergestellt) bzw. K2' (hydrothermal gealtert) und einem Katalysator nach dem Stand der Technik (VK1 bzw. VK1');

**Figur 3:** den auf den $\alpha$-Wert normierter $NO_x$-Umsatz über den frisch hergestellten Katalysatoren VK1, VK2 (beide Stand der Technik) und K2 (erfindungsgemäß) im nicht Kohlenwasserstoffe-haltigen Abgas;

**Figur 4:** eine TEM-Aufnahme einer Probe aus dem erfindungsgemäßen Katalysator K4, in der die räumliche Anordnung der Komponenten des katalytisch aktiven Materials zueinander zu erkennen ist: 1: Kugelförmige $SiO_2$-Partike A: mit Eisen ausgetauschter Zeolith B: Eisenoxid aus im Material enthaltenen, überschüssigem Eisen

**Figur 5:** eine TEM-Aufnahme einer Probe aus dem katalytisch aktiven Material im erfindungsgemäßen Katalysator K4: Im kreisförmig abgegrenzten Bereich um A ist $SiO_2$ zu erkennen, dass sich dadurch auszeichnet, dass es keine Fernordnung (Kristallgitterebenen) aufweist und somit amorph ist.

**Figur 6:** eine TEM-Aufnahme einer Probe aus dem katalytisch aktiven Material im erfindungsgemäßen Katalysator K4: Im Bereich um C ist mit Eisen ausgetauschter Zeolith zu erkennen, der Kristallgitterebenen mit einem Gitterebenenabstand von ca.1,1 nm aufweist.

**Figur 7:** die Temperaturdifferenz $\Delta T$ zwischen der Temperatur vor Katalysator und der Temperatur nach Katalysator, wenn der Katalysator vor Beginn der Messung mit Kohlenwasserstoffen beladen wurde, nach Anheben der Reaktortemperatur / Temperatur vor Katalysator auf 400°C: Vergleich der durch HC-Abbrand erzeugten Exotherme über den erfindungsgemäßen Katalysatoren K3 - K5 (frisch hergestellt) bzw. K3' - K5' (hydrothermal gealtert) und einem Katalysator nach dem Stand der Technik (VK1 bzw. VK1');

**Figur 8:** den auf den $\alpha$-Wert normierter $NO_x$-Umsatz über den frisch hergestellten Katalysatoren VK1, VK2 (beide Stand der Technik) und K3 - K5 (erfindungsgemäß) im nicht Kohlenwasserstoffe-haltigen Abgas;

**Figur 9:** den auf den $\alpha$-Wert normierter $NO_x$-Umsatz über den hydrothermal gealterten Katalysatoren VK1', VK2' (beide Stand der Technik) und K3' - K5' (erfindungsgemäß) im nicht Kohlenwasserstoffe-haltigen Abgas.

**Vergleichsbeispiel 1:**

Es wurde eine Beschichtungssuspension für einen kommerziell erhältlichen SCR-Katalysator auf der Basis von mit Eisen ausgetauschtem $\beta$-Zeolith hergestellt. Hierzu wurden ein kommerzieller $SiO_2$-Binder, ein kommerzieller

Böhmit-Binder (als Beschichtungshilfsstoffe, Eisen(III)-nitrat-nonahydrat und kommerziell erhältlicher β-Zeolith mit einem molaren $SiO_2/Al_2O_3$-Verhältnis (SAR) von 25 in Wasser suspendiert und nach einem herkömmlichen Tauchverfahren auf einen keramischen Durchflusswabenkörper mit 62 Zellen pro Quadratzentimeter und einer Zellwandstärke von 0,17 Millimetern aufgebracht. Das beschichtete Bauteil wurde zunächst für 15 Minuten bei 350°C, dann für die Dauer von 2 Stunden bei 500°C kalziniert. Die Beschichtung im so erhaltenen Katalysators VK1 bestand zu 90 % aus β-Zeolith und hatte einen Eisengehalt, berechnet als $Fe_2O_3$, von 4,5 Gew.-%.

**Vergleichsbeispiel 2:**

Es wurde ein HC-resistenter SCR-Katalysator gemäß der WO 2009/135588 hergestellt. Hierzu wurde ein kommerziell erhältlicher, kleinporiger Zeolith vom Ferrierit-Typ mit einem molaren $SiO_2/Al_2O_3$-Verhältnis (SAR) von 20 in Wasser aufgeschlämmt. Der Suspension wurde Eisen(III)-nitrat-nonahydrat zugesetzt. Nach Mahlung wurde diese Suspension zum Beschichten eines monolithischen Durchflusswabenkörpers mit 62 Zellen pro Quadratzentimeter und einer Zellwandstärke von 0,17 Millimetern in einem herkömmlichen Tauchverfahren verwendet. Das beschichtete Bauteil wurde zunächst für 15 Minuten bei 350°C, dann für 2 Stunden bei 500°C kalziniert. Dies Beschichtung des so erhaltenen Katalysators VK2 bestand aus Ferrierit mit einem Eisengehalt von 4,5 %, berechnet als $Fe_2O_3$.

**Untersuchung zur katalytischen Aktivität:**

In einem ersten Test wurde als Maß für die **HC-Resistenz** der Katalysatoren untersucht, wie hoch die Exothermenerzeugung über einem mit Kohlenwasserstoffen beladenen Katalysator bei thermischer Belastung ist. Verglichen wurde der herkömmliche SCR-Katalysator nach dem Stand der Technik VK1 mit erfindungsgemäßen Katalysatoren.
Hierzu wurden die frisch hergestellten Bohrkerne der Katalysatoren am Motorprüfstand bei 100°C für eine Zeit von 60 Minuten mit Kohlenwasserstoffen beaufschlagt. Anschließend wurden die Bohrkerne in einer Modellgasanlage bei 100°C Reaktortemperatur für 10 Minuten vorkonditioniert (10% $O_2$, 10% $CO_2$, 5% $H_2O$, Balance $N_2$, 4 $Nm^3$/h Gesamtfluss). Dann wurde die Reaktortemperatur innerhalb von 30 Sekunden bei gleicher Gasmischung auf 400°C angehoben. Um ein Maß für die entstandene Exothermie zu erhalten, wurden die Temperaturen des Abgases 5 Millimeter vor Eintritt in den Bohrkern und 76,2 Millimeter nach Austritt aus dem Bohrkern erfasst und ausgewertet.

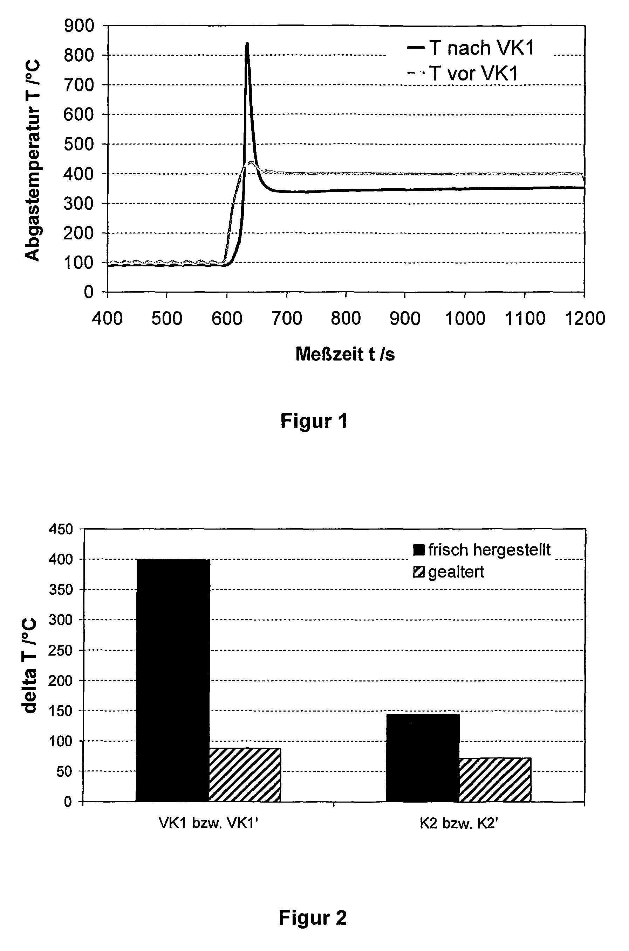

**Figur 1** zeigt beispielhaft die Abgastemperatur 5 Millimeter vor Eintritt in den Vergleichskatalysator VK1 und die gemessene Abgastemperatur 76,2 Millimeter hinter dem Vergleichskatalysator VK1. Kurz nach Anheben der Reaktortemperatur ab t = 600 sec ist eine deutliche Exotherme zu beobachten, die sich in einem Anstieg der Abgastemperatur nach Katalysator auf über 800°C wiederspiegelt.
Um die durch die Katalysatoren erzeugten Exothermen besser vergleichen zu können, wurde Unschärfen in der Temperaturführung dadurch Rechnung getragen, dass die Temperaturdifferenz ΔT zwischen der Temperatur vor Katalysator und der Temperatur nach Katalysator gebildet wurde. Dabei war T(vorKat) die Abgastemperatur 5 Millimeter vor dem Bohrkern und T(nachKat) die Temperatur des Abgases 76,2 Millimeter hinter dem Bohrkern. Die Temperaturen wurden zu einem Zeitpunkt $t_{vorKat} = t_{max, vorKat}$ bzw. $t_{nachKat} = t_{max, nachKat}$ erfasst, wenn das Temperaturmaximum vor bzw. nach Katalysator vorlag.
In weiteren Tests wurde die **Stickoxid-Konvertierung** mit Ammoniak über den erfindungsgemäßen Katalysatoren und den Vergleichskatalysatoren VK1 und VK2 in frisch hergestelltem Zustand und nach hydrothermaler Alterung untersucht.
Die Untersuchung erfolgte in einem stationären Test an einer Modellgasanlage mit folgenden Gaskonzentrationen:

| Modellgaskomponente: | Konzentration: |
|---|---|
| NO | 500 Vppm |
| $NH_3$ | 450 Vppm |
| $O_2$ | 5 Vol% |
| $H_2O$ | 5 Vol% |
| $N_2$ | Rest |

Das Molverhältnis von Ammoniak zu den Stickoxiden wird bei Untersuchungen der SCR-Aktivität gewöhnlich mit Alpha bezeichnet:

$$\alpha = \frac{c(NH_3)}{c(NOx)}$$

Aus den in der Tabelle aufgeführten Gaskonzentrationen ergibt sich ein Alpha-Wert von $\alpha$ = 0,85. Die Raumgeschwindigkeit in den durchgeführten Modellgastests betrug 30.000 h$^{-1}$.

Die gemessenen NO$_x$-Konvertierungen werden im Rahmen dieser Schrift in auf den $\alpha$-Wert normierter Form, d.h. als NO$_x$-Umsatz / $\alpha$-Wert angegeben.

**Beispiel 1:**

Auf einen weiteren keramischen Durchflusswabenkörper mit 62 Zellen pro Quadratzentimeter und einer Zellwandstärke von 0,17 Millimetern wurde eine Beschichtung aus kommerziell erhältlichem, mit Eisen ausgetauschtem $\beta$-Zeolithen gemäß Vergleichsbeispiel 1 aufgebracht.

In weiteren Schritten wurde der bereits einfach beschichtete Wabenkörper in einem Tauchverfahren mit einer Lösung aus Tetraethoxysilan (TEOS) in Ethanol imprägniert, bis die aufgenommene Silanmenge 4,3 g/L SiO$_2$, bezogen auf das Volumen des Wabenkörpers entsprach. Nach Trocknung im Leistergebläse bei 50°C und Kalzination bei 350°C für die Dauer von 10 bis 15 Minuten und 500°C für die Dauer von 2 Stunden wurde der Katalysator K2 erhalten. Dem Katalysator wurden zwei Bohrkerne mit einem Durchmesser von 25,4 Millimeter und einer Länge von 76,2 Millimeter entnommen, von denen einer einer synthetischen Alterung im Ofen in einer Atmosphäre enthaltend 10 Vol.-% Wasserdampf und 10 Vol.-% Sauerstoff in Stickstoff für die Dauer von 16 Stunden bei einer Temperatur von 750°C unterzogen ($\rightarrow$ K2') wurde. Die Bohrkerne K2 (frisch hergestellt) und K2' (hydrothermal gealtert) wurden dann den vorstehend beschriebenen Untersuchungen zur katalytischen Aktivität unterzogen.

**Figur 2** zeigt die über dem erfindungsgemäßen Katalysator aus Beispiel 1 im frisch hergestellten Zustand (K2) und im gealterten Zustand (K2') erzeugte Exotherme bei Aufheizen nach Beladung mit Kohlenwasserstoffen im Vergleich zum herkömmlichen SCR-Katalysator VK1 (frisch hergestellt) bzw. VK1' (hydrothermal gealtert). Im frisch hergestellten Zustand zeigt der erfindungsgemäße Katalysator K2 eine um mehr als 250° geringere Exotherme als der Vergleichskatalysator. Auch nach hydrothermaler Alterung ist die am erfindungsgemäßen Katalysator erzeugte Exotherme um mehr als 15° geringer. Die Tatsache, dass auch der SCR-Katalysator nach dem Stand der Technik (VK1) nach hydrothermaler Alterung eine signifikant geringere Exotherme zeigt, ist darauf zurückzuführen, dass mit der Alterung eine Schädigung der katalytisch aktiven Zentren eingetreten ist, die auch die Fähigkeit zur katalytischen Kohlenwasserstoffverbrennung negativ beeinflusst. Insgesamt erweist sich der erfindungsgemäße Katalysator K2 somit als deutlich HC-resistenter als der herkömmliche SCR-Katalysator.

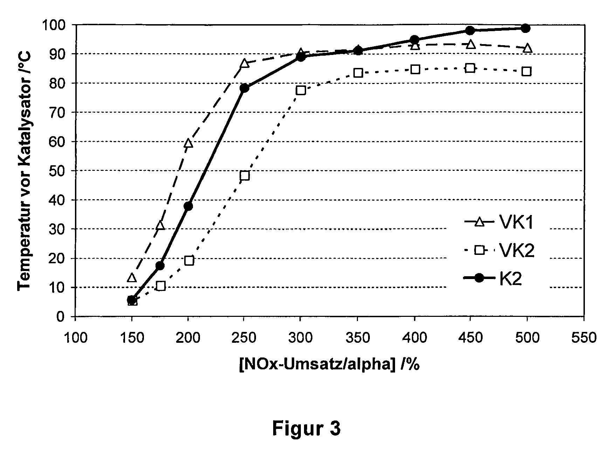

**Figur 3** zeigt die auf den $\alpha$-Wert normierte NO$_x$-Konvertierung der frisch hergestellten Katalysatoren VK1, VK2 und K2. Es ist deutlich zu erkennen, dass der erfindungsgemäße Katalysator K2 gegenüber dem HC-resistenten Katalysator nach dem Stand der Technik VK2 eine signifikante SCR-Aktivitätsverbesserung im gesamten Temperaturbereich aufweist. Gegenüber dem herkömmlichen SCR-Katalysator zeigt K2 im nicht Kohlenwasserstoffe-haltigen Abgas leichte Nachteile im Tieftemperaturbereich bei einer zugleich verbesserten Konvertierung im Hochtemperaturbereich ab 400°C.

**Beispiel 2:**

Auf einen weiteren keramischen Durchflusswabenkörper mit 62 Zellen pro Quadratzentimeter und einer Zellwandstärke von 0,17 Millimetern wurde eine Beschichtung aus kommerziell erhältlichem, mit Eisen ausgetauschtem $\beta$-Zeolithen gemäß Vergleichsbeispiel 1 aufgebracht.

Anschließend wurde der so beschichtete Wabenkörper nach Tauchung in verdünnter Salpetersäure mit einer Lösung enthaltend 15 Gew.-% Tetraethoxysilan (TEOS), 5 Gew.-% Wasser und 80 Gew.-% Ethanol imprägniert, getrocknet und bei 350°C für die Dauer von 10 bis 15 Minuten und 500°C für die Dauer von 2 Stunden kalziniert. Dabei wurde der Katalysator K3 erhalten.

**Beispiel 3:**

Auf einen weiteren keramischen Durchflusswabenkörper mit 62 Zellen pro Quadratzentimeter und einer Zellwandstärke von 0,17 Millimetern wurde eine Beschichtung aus kommerziell erhältlichem, mit Eisen ausgetauschtem $\beta$-Zeolithen gemäß Vergleichsbeispiel 1 aufgebracht.

Anschließend wurde der so beschichtete Wabenkörper mit einer Lösung enthaltend 15 Gew.-% Tetraethoxysilan (TEOS), 5 Gew.-% Wasser und 80 Gew.-% Ethanol imprägniert, getrocknet und bei 350°C für die Dauer von 10 bis 15 Minuten und 500°C für die Dauer von 2 Stunden kalziniert. Dabei wurde der Katalysator K4 erhalten.

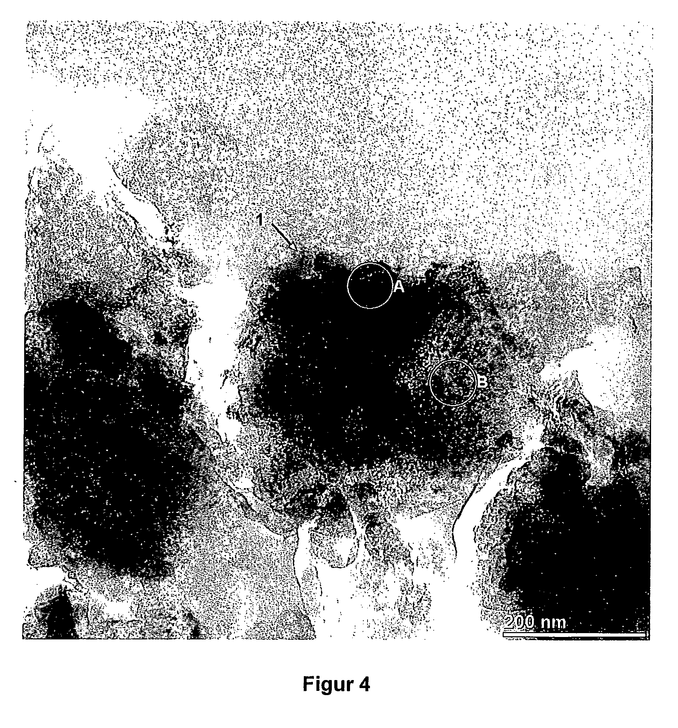

Neben Bohrkernen zur Untersuchung der HC-Resistenz und der katalytischen Aktivität wurden dem Katalysator K4 Proben zur Charakterisierung des katalytisch akiven Materials entnommen. Nach Verfahren, die dem Fachmann der optischen Analysenmethoden geläufig sind, wurde dem ursprünglich hergestellten Trägerkatalysator K4 eine Probe entnommen und als Ganzes in lichtdurchlässiges Harz eingebettet. Eine daraus abgetrennte Dünnschnittprobe wurde im hochauflösenden Transmissionselektronenmikroskop mit integriertem energiedispersivem Röntgenspektroskop (EDX = energy dispersive X-Ray spectroskopy) untersucht. **Figur 4** zeigt einen repräsentativen Ausschnitt aus der Probe. Darin zu erkennen sind oberflächliche Kugel aus Siliziumdioxid (1; EDX: 51,84 Atom-% O; 48,16 Atom-% Si), die auf mit Eisen ausgetauschten Zeolith-Partikeln (A; EDX: 57,84 Atom-% O; 2,59 Atom-% Al; 39,18 Atom-% Si; 0,4 Atom-% Fe) abgeschieden sind. Zusätzlich ist im Probenmaterial Eisenoxid neben dem mit Eisen ausgetauschten Zeolithen enthalten (B; EDX: 55,78 Atom-% O; 0,93 Atom-% Na; 8,48 Atom-% Al; 24,05 Atom-% Si; 0,51 Atom-% Cl; 10,26 Atom-% Fe), das aus zum Ionenaustausch zugesetzten, überschüssigen Eisenverbindungen während der Herstellung des eingesetzten, kommerziell erhältlichen Zeolithen resultiert.

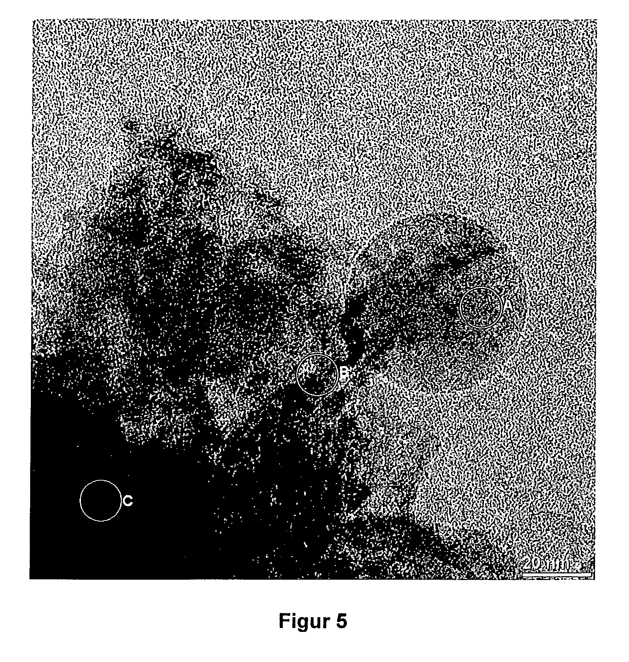

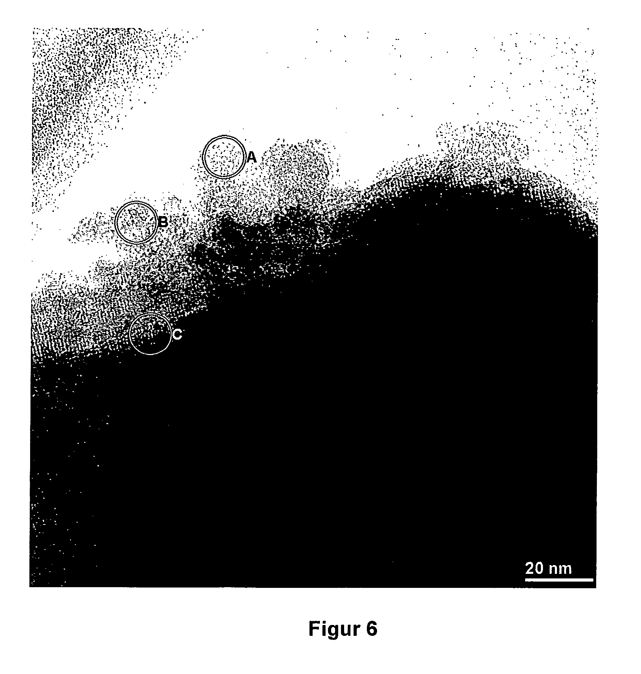

Für die weitere Charakterisierung des katalytisch aktiven Materials wurde eine geringe Menge desselben durch mechanisches Abtrennen vom Tragkörper isoliert. Das resultierende Pulver wurde ebenfalls mit Hilfe der Transmissionselektronenmikroskopie und der energiedispersivem Röntgenspektroskopie untersucht. Die **Figuren 5** und **6** zeigen detaillierte Ausschnitte aus dem Probenmaterial. In **Figur 5** ist im gekennzeichneten kreisförmigen Bereich Siliziumdioxid zu erkennen, dass sich dadurch auszeichnet, dass es keine Fernordnung (Kristallgitterebenen) erkennen läßt. Dies belegt, dass das im erfindungsgemäßen Katalysator vorliegenden $SiO_2$ amorph ist und sich somit von herkömmlichen Siliziumdioxidmaterialien, wie sie beispielsweise kommerziell erworben, vermahlen und in herkömmlichen Tauchverfahren auf einen Tragkörper beschichtet werden können, unterscheidet. Figur 6 zeigt einen anderen Ausschnitt aus der Probe. Im mit "A" gekennzeichneten Bereich liegt mit Eisen ausgetauschter Zeolith vor. Dieser weist eine klare Fernordnung mit einem Kristallgitterebenenabstand von ca. 1,1 Nanometern auf.

**Beispiel 4:**

Auf einen weiteren keramischen Durchflusswabenkörper mit 62 Zellen pro Quadratzentimeter und einer Zellwandstärke von 0,17 Millimetern wurde eine Beschichtung aus kommerziell erhältlichem, mit Eisen ausgetauschtem β-Zeolithen entsprechend dem Vergleichsbeispiel 1 aufgebracht.

Anschließend wurde der so beschichtete Wabenkörper mit einer Lösung enthaltend 15 Gew.-% Tetraethoxysilan (TEOS), 35 Gew.-% Wasser und 50 Gew.-% Ethanol imprägniert, bis eine Silanmenge entsprechend 6,6 g/L $SiO_2$ aufgebracht war. Nach Trockung und Kalzination bei 350°C für die Dauer von 10 bis 15 Minuten und 500°C für die Dauer von 2 Stunden wurde der Katalysator K5 erhalten.

Den Katalysatoren aus den Beispielen 2 bis 4 wurden jeweils 2 Bohrkerne mit einem Durchmesser von 25,4 Millimetern und einer Länge von 76,2 Millimetern entnommen, von denen jeweils einer einer synthetischen Alterung im Ofen in einer Atmosphäre enthaltend 10 Vol.-% Wasserdampf und 10 Vol.-% Sauerstoff in Stickstoff für die Dauer von 16 Stunden bei einer Temperatur von 750°C unterzogen wurde. Die Bohrkerne K3, K4 und K5 (frisch hergestellt) sowie K3', K4' und K5' (gealtert) wurden dann den vorstehend beschriebenen Untersuchungen zur katalytischen Aktivität unterzogen.

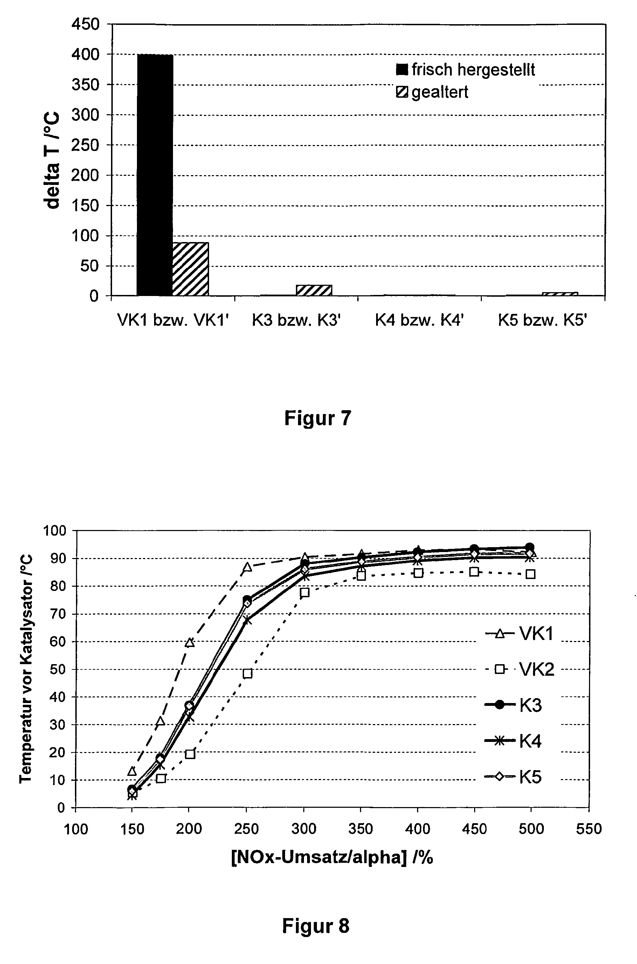

**Figur 7** zeigt einen Vergleich der beobachteten Exothermen bei Temperaturerhöhung über den mit Kohlenwasserstoffen beladenen Katalysatoren aus den Beispielen 3 bis 5 mit dem herkömmlichen SCR-Katalysator aus Vergleichsbeispiel 1 im frisch hergestellten und im gealterten Zustand. Alle erfindungsgemäßen Katalysatoren zeigen sowohl im frisch hergestellten, als auch im hydrothermal gealterten Zustand erheblich geringere bzw. gar keine (!) durch Kohlenwasserstoffabbrand verursachte Exothermen. Sie zeichnen sich folglich ebenfalls durch eine deutlich verbesserte HC-Resistenz aus.

**Figur 8** zeigt die auf den $\alpha$-Wert normierten $NO_x$-Konvertierungen der erfindungsgemäßen Katalysatoren K3 - K5 im Vergleich zum HC-resistenten SCR-Katalysator nach dem Stand der Technik VK2 im frisch hergestellten Zustand. Alle erfindungsgemäßen Katalysatoren zeichnen sich gegenüber dem HC-resistenten Katalysator nach dem Stand der Technik durch deutlich verbesserte Stickoxid-Konvertierungen im gesamten Temperaturbereich aus.

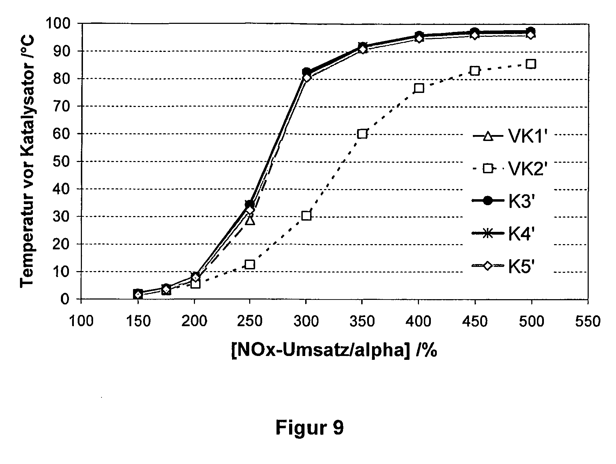

**Figur 9** zeigt die auf den $\alpha$-Wert normierten $NO_x$-Konvertierungen der erfindungsgemäßen Katalysatoren K3' - K5' im Vergleich den SCR-Katalysatoren nach dem Stand der Technik VK1' und VK2' in hydrothermal gealtertem Zustand. Alle erfindungsgemäßen Katalysatoren zeichnen sich gegenüber dem HC-resistenten Katalysator nach dem Stand der Technik VK2' durch deutlich höhere Stickoxid-Konvertierungen im gesamten Temperaturbereich und somit durch eine signifikant verbesserte Alterungsstabilität aus. Die Alterungsstabilität der erfindungsgemäßen Katalysatoren entspricht der des herkömmlichen, nicht HC-resistenten SCR-Katalysators VK1.

In völliger Analogie zu Beispiel 3 können auch Katalysatoren mit guter HC Resistenz bei guter katalytischer Aktivität erhalten werden, indem für die Imprägnierung der mit Fe-Beta beschichteten Wabenkörper Lösungen der in den nachfolgenden Beispielen 5 bis 9 beschriebenen Zusammensetzungen verwendet werden.

| Beispiel | Art des Silans | Anteil Silan | Anteil Wasser | Anteil Ethanol |
|---|---|---|---|---|
| 5 | N-(2-Aminoethyl)-3-aminopropyltrimethoxysilan | 16% | 3,75% | 80,2% |
| 6 | Diisobutyldimethoxysilan | 14.7% | 2,5% | 82,8% |
| 7 | Phenyltriethoxysilan | 17.3% | 3,75% | 78,9% |
| 8 | Methacryloxypropyltrimethoxysilan | 17,9% | 3,75% | 78,4% |
| 9 | Triethoxyoctylsilan | 19,9% | 3,75% | 76,3% |

**Beispiel 10**

Auf einen weiteren keramischen Durchflusswabenkörper mit 62 Zellen pro Quadratzentimeter und einer Zellwandstärke von 0,17 Millimetern wurde eine Beschichtung aus kommerziell erhältlichem, mit Eisen ausgetauschtem $\beta$-Zeolithen entsprechend dem Vergleichsbeispiel 1 aufgebracht.

Dann wurde eine weitere Beschichtungssuspension enthaltend eine kommerziell erhältliche, pyrogene Kieselsäure, deren Primärpartikel einen $d_{50}$-Wert der Partikelgrößenverteilung von 12nm aufweist, in Wasser hergestellt, wobei unter dem $d_{50}$-Wert der Partikelgrößenverteilung der pyrogenen Kieselsäure zu verstehen ist, dass 50 % des Gesamtvolumens der pyrogenen Kieselsäure nur solche Partikel enthält, deren Durchmesser kleiner oder gleich dem als $d_{50}$ angegebenen Wert ist. Mit dieser Suspension wurde der bereits einfach beschichtete Durchflusswabenkörper erneut nach einem herkömmlichen Tauchverfahren belegt. Nach Trocknung und Kalzination bei 350°C für 10 bis 15 Minuten und 500°C für die Dauer von 2 Stunden, wurde ein Katalysator enthalten, dessen zweite Schicht aus $SiO_2$ die erste Schicht aus $\beta$-Zeolith abgasseitig nahezu vollständig überdeckte.

In völliger Analogie zu Beispiel 10 können auch Katalysatoren mit guter HC Resistenz bei guter katalytischer Aktivität erhalten werden, indem für die Aufbringung der zweiten Schicht aus SiO2, die die erste Schicht aus $\beta$-Zeolith abgasseitig nahezu vollständig überdeckt, Beschichtungssuspensionen aus pyrogenen Kieselsäuren mit anderen Partikelgrößenverteilungen verwendet werden:

**Beispiel 11:** Pyrogene Kieselsäure mit $d_{50}$ = 40nm

**Beispiel 12:** Pyrogene Kieselsäure mit $d_{50}$ = 20nm

**Beispiel 13:** Pyrogene Kieselsäure mit $d_{50}$ = 16nm

**Beispiel 14:** Pyrogene Kieselsäure mit $d_{50}$ = 14nm

**Beispiel 15:** Pyrogene Kieselsäure mit $d_{50}$ = 7nm

**Beispiel 16:**

Es wurde eine Beschichtungssuspension aus einem kommerziell erhältlichen ZSM-5-Zeolith hergestellt. Hierzu wurden Eisen(III)-nitrat-nonahydrat und kommerziell erhältlicher ZSM-5-Zeolith mit einem molaren $SiO_2/Al_2O_3$-Verhältnis (SAR) von 25 in Wasser suspendiert und nach einem herkömmlichen Tauchverfahren auf einen keramischen Durchflusswabenkörper mit 62 Zellen pro Quadratzentimeter und einer Zellwandstärke von 0,17 Millimetern aufgebracht. Das beschichtete Bauteil wurde zunächst für 15 Minuten bei 350°C, dann für die Dauer von 2 Stunden bei 500°C kalziniert. Die Beschichtung im so erhaltenen Katalysator hatte einen Eisengehalt, berechnet als $Fe_2O_3$, von 4,5 Gew.-%.

Anschließend wurde der so beschichtete Wabenkörper mit einer Lösung enthaltend 15 Gew.-% Tetraethoxysilan (TEOS), 5 Gew.-% Wasser und 80 Gew.-% Ethanol imprägniert, getrocknet und bei 350°C für die Dauer von 10 bis 15 Minuten und 500°C für die Dauer von 2 Stunden kalziniert.

In völliger Analogie zu Beispiel 16 können auch Katalysatoren mit guter HC Resistenz bei guter katalytischer Aktivität erhalten werden, indem die erste, direkt auf den Tragkörper aufgebrachte, katalytisch aktive Beschichtung, die in folgender Tabelle aufgeführten, Übergangsmetall (ÜM)-ausgetauschten Zeolithe enthält.

| Beispiel | ÜM-Salz | Zeolith-Typ | SAR | Anteil ÜM-Oxid |
|---|---|---|---|---|
| 17 | Kupfer(II)nitrat Trihydrat | ZSM-5 | 25 | 2,5% CuO |

(fortgesetzt)

| Beispiel | ÜM-Salz | Zeolith-Typ | SAR | Anteil ÜM-Oxid |
|---|---|---|---|---|
| 18 | Mangan(II)nitrat Heptahydrat | ZSM-20 | 2,5% | 3% MnO |
| 19 | Palladiumtetraamminnitrat | US-Y | 12 | 0,1% PdO |
| 20 | Silbernitrat | US-Y | 12 | 1% Ag2O |
| 21 | Cernitrat Hexahydrat | MOR | 20 | 3,5% CeO2 |

Alle Beispiele zeigen, dass es gelungen ist, SCR-Katalysatoren bereit zu stellen, die gegenüber herkömmlichen, zeolithischen SCR-Katalysatoren eine deutlich verbesserte HC-Resistenz aufweisen, wobei mit ihnen zugleich erheblich höhere Stickoxid-Konvertierungsleistungen erzielt werden können, als mit den bislang im Stand der Technik bekannten HC-resistenten SCR-Katalysatoren.

**Patentansprüche**

1.  Katalysator für die selektive katalytische Reduktion von Stickoxiden mit Ammoniak in Kohlenwasserstoffe enthaltenden Abgasen enthaltend:

    • einen Tragkörper;
    • eine erste, direkt auf den Tragkörper aufgebrachte, katalytisch aktive Beschichtung enthaltend einen mit einem oder mehreren Übergangsmetallen ausgetauschten Zeolithen und/oder eine mit einem oder mehreren Übergangsmetallen ausgetauschte zeolithähnliche Verbindung, und
    • eine zweite Beschichtung, die die erste Beschichtung abgasseitig überdeckt und so beschaffen ist, dass sie den Kontakt von im Abgas enthaltenen Kohlenwasserstoffen mit mindestens 3 C-Atomen mit der darunter liegenden ersten Beschichtung behindert, ohne dabei den Durchtritt von Stickoxiden und Ammoniak zur ersten Beschichtung zu blockieren und

    ein oder mehrere Oxide ausgewählt aus der Gruppe bestehend aus Siliziumdioxid, Germaniumdioxid, Aluminiumoxid, Titandioxid, Zinnoxid, Ceroxid, Zirkondioxid und Mischoxiden davon,
    enthält.

2.  Katalysator nach Anspruch 1, **dadurch gekennzeichnet, dass** der in der ersten, direkt auf den Tragkörper aufgebrachten, katalytisch aktiven Beschichtung enthaltene, Übergangsmetall-ausgetauschten Zeolith und/oder die Übergangsmetall-ausgetauschte zeolithähnliche Verbindung ausgewählt ist aus der Gruppe bestehend aus β-Zeolith, ZSM-5, ZSM-20, USY, MOR oder Mischungen davon, wobei das Übergangsmetall ausgewählt ist aus der Gruppe bestehend aus Cer, Mangan, Eisen, Kupfer, Silber, Gold, Platin, Palladium und/oder Mischungen davon.

3.  Katalysator nach Anspruch 1 , **dadurch gekennzeichnet, dass** der $d_{50}$-Wert der Partikelgrößenverteilung der Oxide in der zweiten Beschichtung gleich oder kleiner als 100 nm ist, wobei unter dem $d_{50}$-Wert der Partikelgrößenverteilung der Oxide zu verstehen ist, dass 50 % des Gesamtvolumens der Oxide nur solche Partikel enthält, deren Durchmesser kleiner oder gleich dem als $d_{50}$ angegebenen Wert ist.

4.  Katalysator nach Anspruch 1, **dadurch gekennzeichnet, dass** die zweite Beschichtung ein oder mehrere Oxide ausgewählt aus der Gruppe bestehend aus Siliziumdioxid, Germaniumdioxid, Aluminiumoxid, Titandioxid, Zinnoxid, Ceroxid, Zirkondioxid und Mischoxiden davon enthält und erzeugt wird durch Imprägnierung des bereits mit der ersten Beschichtung versehenen Tragkörpers mit einer Lösung enthaltend ein oder mehrere Alkoholate der Formel (I)

    $$(RO)_{n-m}MeR'_m \qquad (I)$$

    worin
    n für 3 oder 4 steht und m < n ist:

    Me Silizium, Germanium, Aluminium, Titan, Zinn oder Zirkonium bedeutet;
    R für $(C_1-C_4)$-Alkyl oder Phenyl steht; und
    R' für $(C_1-C_8)$-Alkyl, Amino-$(C_1-C_4)$-Alkyl, Amino-$(C_1-C_4)$-Alkyl, deren Aminogruppe durch Amino-$(C_1-C_4)$-alkyl

substituiert ist oder Methacryloxy-$(C_1-C_4)$-alkyl steht und anschließendes Trocknen.

5. Katalysator nach Anspruch 4, **dadurch gekennzeichnet, dass** R für Methyl" Ethyl, Isopropyl, Butyl oder Phenyl steht.

6. Katalysator nach Anspruch 4, **dadurch gekennzeichnet, dass** R' für Amino-$(C_1-C_4)$-alkyl, N-(2-Aminoethyl)-3-aminopropyl, Isopropyl, Isobutyl, Phenyl, Octyl oder Methacryloxy-$(C_1-C_4)$-alkyl steht.

7. Katalysator nach einem der Ansprüche 1 und 3 bis 6, **dadurch gekennzeichnet, dass** die zweite Beschichtung aus Siliziumdioxid besteht.

8. Katalysator nach Anspruch 7, **dadurch gekennzeichnet, dass** die zweite Beschichtung aus Siliziumdioxid hergestellt wird durch Aufbringen einer wässrigen Suspension von pyrogener Kieselsäure, die Primärpartikel mit einem $d_{50}$-Wert der Partikelgrößenverteilung gleich oder kleiner als 100 nm aufweist, auf den bereits mit der ersten Beschichtung versehenen Tragkörper, wobei unter dem $d_{50}$-Wert der Partikelgrößenverteilung der pyrogenen Kieselsäure zu verstehen ist, dass 50 % des Gesamtvolumens der pyrogenen Kieselsäure nur solche Partikel enthält, deren Durchmesser kleiner oder gleich dem als $d_{50}$ angegebenen Wert ist.

9. Katalysator nach Anspruch 8, **dadurch gekennzeichnet, dass** die pyrogene Kieselsäure eine Halogenid- und/oder Hydroxid-modifizierte Oberfläche aufweist und durch Hydrolyse und/oder Kondensation eine Vernetzung der Kieselsäure-Partikel in der resultierenden Schicht erzeugt wird.

10. Verfahren zur Verminderung von Stickoxiden enthaltend Stickstoffmonoxid und Stickstoffdioxid in Kohlenwasserstoff-haltigen Dieselmotorenabgasen umfassend die Verfahrensschritte

   • Zugabe von Ammoniak oder einer zu Ammoniak zersetzlichen Vorläuferverbindung als Reduktionsmittel zum zu reinigenden, Stickoxide und Kohlenwasserstoffe enthaltenden Abgas, und
   • Überleiten des resultierenden Gemisches aus Abgas und Reduktionsmittel über einen Katalysator nach einem der Ansprüche 1 bis 9.

11. Verfahren nach Anspruch 10, **dadurch gekennzeichnet, dass** das Abgas vor der Zugabe von Ammoniak oder einer zu Ammoniak zersetzlichen Vorläuferverbindung über einen Oxidationskatalysator geleitet wird, der wirksam ist, um wenigstens einen Teil des im Abgas enthaltenen Stickstoffmonoxids in Stickstoffdioxid umzuwandeln.

12. Verfahren nach Anspruch 11, **dadurch gekennzeichnet, dass** der Oxidationskatalysator in Form einer katalytisch aktiven Beschichtung auf einem monolithischen Durchflußwabenkörper und/oder auf einem Wandflußfiltersubstrat vorliegt.

## Claims

1. Catalyst for the selective catalytic reduction of nitrogen oxides with ammonia in exhaust gases comprising hydrocarbons, comprising:

   • a support body;
   • a first catalytically active coating which has been applied directly to the support body and comprises a zeolite exchanged with one or more transition metals and/or a zeolite-like compound exchanged with one or more transition metals, and
   • a second coating which covers the first coating on the exhaust gas side and is configured so as to prevent the contact of hydrocarbons having at least three carbon atoms present in the exhaust gas with the first coating beneath, without blocking the passage of nitrogen oxides and ammonia to the first coating, and comprises

   one or more oxides selected from the group consisting of silicon dioxide, germanium dioxide, aluminum oxide, titanium dioxide, tin oxide, cerium oxide, zirconium dioxide and mixed oxides thereof.

2. Catalyst according to Claim 1, **characterized in that** the transition metal-exchanged zeolite and/or the transition metal-exchanged zeolite-like compound present in the first catalytically active coating applied directly to the support body is selected from the group consisting of beta-zeolite, ZSM-5, ZSM-20, USY, MOR or mixtures thereof, the transition metal being selected from the group consisting of cerium, manganese, iron, copper, silver, gold, platinum, palladium and/or mixtures thereof.

3. Catalyst according to Claim 1, **characterized in that** the $d_{50}$ of the particle size distribution of the oxides in the second coating is equal to or less than 100 nm, the $d_{50}$ of the particle size distribution of the oxides being understood to mean that 50% of the total volume of the oxides contains only those particles whose diameter is less than or equal to the value reported as $d_{50}$.

4. Catalyst according to Claim 1, **characterized in that** the second coating comprises one or more oxides selected from the group consisting of silicon dioxide, germanium dioxide, aluminum oxide, titanium dioxide, tin oxide, cerium oxide, zirconium dioxide and mixed oxides thereof, and is produced by impregnating the support body already provided with the first coating with a solution comprising one or more alkoxides of the formula (I)

$$(RO)_{n-m}MeR'_m \qquad (I)$$

in which
n is 3 or 4 and m < n;
Me is silicon, germanium, aluminum, titanium, tin or zirconium;
R is $(C_1\text{-}C_4)$ -alkyl or phenyl; and
R' is $(C_1\text{-}C_8)$ -alkyl, amino- $(C_1\text{-}C_4)$ -alkyl, amino-$(C_1\text{-}C_4)$-alkyl whose amino group has been substituted by amino-$(C_1\text{-}C_4)$ -alkyl, or $(C_1\text{-}C_4)$-alkylmethacryloyloxy, and then drying.

5. Catalyst according to Claim 4, **characterized in that** R is methyl, ethyl, isopropyl, butyl or phenyl.

6. Catalyst according to Claim 4, **characterized in that** R' is amino-$(C_1\text{-}C_4)$-alkyl, N-(2-aminoethyl)-3-aminopropyl, isopropyl, isobutyl, phenyl, octyl or $(C_1\text{-}C_4)$ -alkylmethacryloyloxy.

7. Catalyst according to any of Claims 1 and 3 to 6, **characterized in that** the second coating consists of silicon dioxide.

8. Catalyst according to Claim 7, **characterized in that** the second coating of silicon dioxide is produced by applying an aqueous suspension of fumed silica having primary particles having a $d_{50}$ of the particle size distribution equal to or less than 100 nm to the support body already provided with the first coating, the $d_{50}$ of the particle size distribution of the fumed silica being understood to mean that 50% of the total volume of the fumed silica contains only those particles whose diameter is less than or equal to the value reported as $d_{50}$.

9. Catalyst according to Claim 8, **characterized in that** the fumed silica has a halide- and/or hydroxide-modified surface and crosslinking of the silica particles in the resulting layer is produced by hydrolysis and/or condensation.

10. Process for reducing the level of nitrogen oxides, comprising nitrogen monoxide and nitrogen dioxide, in hydrocarbon-containing diesel engine exhaust gases, comprising the process steps of:

   • adding ammonia or a precursor compound decomposable to ammonia as a reducing agent to the exhaust gas which comprises nitrogen oxides and hydrocarbons and is to be cleaned, and
   • passing the resulting mixture of exhaust gas and reducing agent over a catalyst according to any of Claims 1 to 9.

11. Process according to Claim 10, **characterized in that** the exhaust gas, before the addition of ammonia or of a precursor compound decomposable to ammonia, is passed over an oxidation catalyst which is effective for conversion of at least some of the nitrogen monoxide present in the exhaust gas to nitrogen dioxide.

12. Process according to Claim 11, **characterized in that** the oxidation catalyst is in the form of a catalytically active coating on a monolithic flow honeycomb and/or on a wall flow filter substrate.

**Revendications**

1. Catalyseur pour la réduction catalytique sélective d'oxydes d'azote avec l'ammoniac dans des gaz d'échappement contenant des hydrocarbures, comprenant:

• un corps de support;

• un premier revêtement catalytiquement actif, déposé directement sur le corps de support, contenant une zéolithe échangée avec un ou plusieurs métaux de transition et/ou un composé de type zéolithe échangé avec un ou plusieurs métaux de transition, et

• un deuxième revêtement, qui recouvre le premier revêtement côté gaz d'échappement et qui est conçu de telle manière qu'il empêche le contact d'hydrocarbures comportant au moins 3 atomes de carbone contenus dans les gaz d'échappement avec le premier revêtement sous-jacent, sans bloquer ainsi le passage d'oxydes d'azote et d'ammoniac vers le premier revêtement, et

contient un ou plusieurs oxydes choisis dans le groupe composé de dioxyde de silicium, dioxyde de germanium, oxyde d'aluminium, dioxyde de titane, oxyde d'étain, oxyde de cérium, dioxyde de zirconium et d'oxydes mixtes de ceux-ci.

2. Catalyseur selon la revendication 1, **caractérisé en ce que** la zéolithe échangée avec un métal de transition et/ou le composé de type zéolithe échangé avec un métal de transition, contenu(e) dans le premier revêtement catalytiquement actif déposé sur le corps de support, est choisi(e) dans le groupe composé de β-zéolithe, ZSM-5, ZSM-20, USY, MOR ou des mélanges de celles-ci, dans lequel le métal de transition est choisi dans le groupe composé du cérium, manganèse, fer, cuivre, argent, or, platine, palladium et/ou de mélanges de ceux-ci.

3. Catalyseur selon la revendication 1, **caractérisé en ce que** la valeur $d_{50}$ de la distribution des tailles de particules des oxydes dans le deuxième revêtement est égale ou inférieure à 100 nm, dans lequel, par la valeur $d_{50}$ de la distribution des tailles de particules des oxydes, il faut comprendre que 50 % du volume total des oxydes ne contiennent que des particules dont le diamètre est inférieur ou égal à la valeur indiquée comme $d_{50}$.

4. Catalyseur selon la revendication 1, **caractérisé en ce que** le deuxième revêtement contient un ou plusieurs oxydes choisis dans le groupe composé de dioxyde de silicium, dioxyde de germanium, oxyde d'aluminium, dioxyde de titane, oxyde d'étain, oxyde de cérium, dioxyde de zirconium et des oxydes mixtes de ceux-ci et est produit par imprégnation du corps de support déjà muni du premier revêtement avec une solution contenant un ou plusieurs alcoolates de la formule (I)

$$(RO)_{n-m}MeR'_m \qquad (I)$$

dans laquelle

n vaut 3 ou 4 et m < n;
Me représente silicium, germanium, aluminium, titane, étain ou zirconium;
R est un alkyle ($C_1$-$C_4$) ou un phényle; et
R' est un alkyle ($C_1$-$C_8$), un amino-alkyle ($C_1$-$C_4$), un amino-alkyle ($C_1$-$C_4$), dont le groupe amino est substitué par un amino-alkyle ($C_1$-$C_4$), ou un méthacryloxy-alkyle ($C_1$-$C_4$), suivi d'un séchage.

5. Catalyseur selon la revendication 4, **caractérisé en ce que** R représente un méthyle, un éthyle, un isopropyle, un butyle ou un phényle.

6. Catalyseur selon la revendication 4, **caractérisé en ce que** R' représente un amino-alkyle ($C_1$-$C_4$), un N-(2-aminoéthyl)-3-aminopropyle, un isopropyle, un isobutyle, un phényle, un octyle ou un méthacryloxy-alkyle ($C_1$-$C_4$).

7. Catalyseur selon l'une quelconque des revendications 1 et 3 à 6, **caractérisé en ce que** le deuxième revêtement se compose de dioxyde de silicium.

8. Catalyseur selon la revendication 7, **caractérisé en ce que** le deuxième revêtement est réalisé en dioxyde de silicium par dépôt d'une suspension aqueuse d'acide silicique pyrogénique, qui présente des particules primaires avec une valeur $d_{50}$ de la distribution des tailles de particules égale ou inférieure à 100 nm, sur le corps de support déjà muni du premier revêtement, dans lequel, par la valeur $d_{50}$ de la distribution des tailles de particules de l'acide silicique pyrogénique, il faut comprendre que 50 % du volume total de l'acide silicique pyrogénique ne contiennent que des particules dont le diamètre est inférieur ou égal à la valeur indiquée comme $d_{50}$.

9. Catalyseur selon la revendication 8, **caractérisé en ce que** l'acide silicique pyrogénique présente une surface modifiée par halogénure et/ou par hydroxyde et on produit par hydrolyse et/ou condensation une réticulation des particules d'acide silicique dans la couche résultante.

10. Procédé pour la diminution d'oxydes d'azote contenant du monoxyde d'azote et du dioxyde d'azote dans des gaz d'échappement de moteur diesel contenant des hydrocarbures, comprenant les étapes suivantes:

• ajout d'ammoniac ou d'un composé précurseur dégradable en ammoniac comme agent réducteur dans les gaz d'échappement à épurer contenant des oxydes d'azote et des hydrocarbures, et
• passage du mélange résultant de gaz d'échappement et d'agent réducteur sur un catalyseur selon l'une quelconque des revendications 1 à 9.

11. Procédé selon la revendication 10, **caractérisé en ce que** l'on conduit les gaz d'échappement, avant l'ajout d'ammoniac ou d'un composé dégradable en ammoniac, sur un catalyseur d'oxydation, qui est efficace pour convertir au moins une partie du monoxyde d'azote contenu dans les gaz d'échappement en dioxyde d'azote.

12. Procédé selon la revendication 11, **caractérisé en ce que** le catalyseur d'oxydation se présente sous la forme d'un revêtement catalytiquement actif sur un corps en nid d'abeilles monolithique à écoulement traversant et/ou un substrat de filtre à écoulement en paroi.

**Figur 1**

**Figur 2**

**Figur 3**

**Figur 4**

**Figur 5**

**Figur 6**

...

**Figur 7**

**Figur 8**

**Figur 9**

**EP 2 680 953 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1054722 A
- WO 2009135588 A
- US 2010077738 A1
- US 2010290963 A1